# EUROPÄISCHE PATENTSCHRIFT

(11) **EP 2 977 263 B1**
(45) Veröffentlichungstag und Bekanntmachung des Hinweises auf die Patenterteilung: **18.12.2019**
(21) Anmeldenummer: 15002145.9
(22) Anmeldetag: 20.07.2015
(51) Int. Cl.: B60Q 1/08, F21S 41/16, F21S 41/141, F21S 41/663, F21S 41/14, F21S 41/675, G02B 26/08

(54) **VERFAHREN ZUM BETREIBEN EINES KRAFTWAGENS MIT EINEM SCHEINWERFER, KRAFTWAGEN SOWIE SCHEINWERFER**
METHOD FOR OPERATING A MOTOR VEHICLE WITH A HEADLAMP, MOTOR VEHICLE AND HEADLAMP
PROCEDE DE FONCTIONNEMENT D'UN VEHICULE DOTE D'UN PHARE, VEHICULE ET PHARE

(30) Priorität: 25.07.2014 DE 102014011099
(43) Veröffentlichungstag der Anmeldung: 27.01.2016
(73) Patentinhaber: AUDI AG, 85045 Ingolstadt (DE)
(72) Erfinder: GUT, Carsten, DE - 85051 Ingolstadt (DE)
(74) Vertreter: Thielmann, Frank

(56) Entgegenhaltungen:
- WO-A1-2009/112910
- DE-A1-102010 028 949
- US-A- 5 389 913
- US-A1- 2009 046 474
- US-A1- 2011 249 460
- US-A1- 2013 258 689

## Beschreibung

Die Erfindung betrifft ein Verfahren gemäß dem Oberbegriff des Patentanspruchs 1 zum Betreiben eines Kraftwagens mit einem Scheinwerfer. Weiterhin betrifft die Erfindung einen Kraftwagen sowie einen Scheinwerfer.

Die DE 31 13 206 A1 beschreibt eine Fahrzeugfrontlampe, bei der wenigstens ein Reflektor einen gerichteten Lichtstrahl mit zeitlich änderndem Winkel umlenkt, um so einen Lichtstrahl mit einer gewünschten Form oder Verteilung auf eine Fahrbahn beziehungsweise Straße zu projizieren. Dadurch kann bei der Frontlampe eine Lichtverteilung zwischen einer Lichtverteilung für ein Abblendlicht und einer Lichtverteilung für ein Fernlicht umgeschaltet werden.

Die DE 10 2009 025 678 A1 beschreibt einen Scheinwerfer, bei welchem ein verschwenkbarer Spiegel genutzt wird, um eine Lichtverteilung zu erzeugen. Je nach Winkellage des Spiegelelements wird dabei eine Lichtquelle ein- und ausgeschaltet. Damit soll ein Dimmeffekt in Teilbereichen der Lichtverteilung erzielt werden.

Aus der DE 10 2011 052 184 A1 ist bereits ein Scheinwerfer bekannt, bei welchem durch eine Lichterzeugungseinrichtung erzeugtes Licht mittels einer Spiegelanordnung aus dem Scheinwerfer herausreflektiert wird. Die Spiegelanordnung umfasst dabei eine Vielzahl von Mikrospiegelelementen. Diese Mikrospiegelelemente sind einzeln beidseitig zu einer Neutrallage zur Erzeugung einer Lichtverteilung um eine Schwenkachse um jeweils einen Winkel mittels einer Schwenkeinrichtung zwischen einer Abstrahlstellung und einer Absorberstellung periodisch umschaltbar. Damit kann die Lichtverteilung des Scheinwerfers so eingestellt werden, dass Informationen über beispielsweise das Wetter oder einen Kraftwagenzustand auf eine Straßenoberfläche projiziert werden können.

Aus der DE 10 2010 028 949 A1 ist ein Scheinwerfer bekannt, welcher eine Strahlungsquelle zum Erzeugen einer elektromagnetischer Strahlung sowie ein Leuchtstoff umfasst, der mittels dieser Strahlung zur Emission von Licht anregbar ist. Dabei ist es vorgesehen, dass eine Strahllenkungsvorrichtung derart angeordnet ist, dass sie die von der Strahlungsquelle abgegebene elektromagnetische Strahlung auf den Leuchtstoff lenkt. Hierdurch soll die Lichtverteilung des Scheinwerfers einstellbar sein.

Die EP 1 722 159 A1 beschreibt ebenfalls einen Scheinwerfer mit einer einstellbaren Lichtverteilung. Zu diesem Zweck ist eine Spiegelanordnung vorgesehen, welche sowohl ein unbeweglich gelagertes Spiegelelement als auch eine Vielzahl von verschwenkbar gelagerten Mikrospiegelelementen umfasst.

Nachteilig an diesen bekannten Scheinwerfern ist, dass für die Einstellung der Lichtverteilung ein Teil des durch die Lichterzeugungseinrichtung erzeugten Lichts verloren geht. Die vorgesehenen, verschwenkbaren Mikrospiegelelemente können das von der Lichterzeugungseinrichtung erzeugte Licht entweder aus dem Scheinwerfer heraus oder auf einen Absorptionsbereich reflektieren. Auf den Absorptionsbereich gelenktes Licht kann beispielsweise nicht zum Ausleuchten einer Straße und/oder eines Fahrwegs genutzt werden. Die Effizienz solcher Scheinwerfer ist also besonders gering, da ein Teil des erzeugten Lichts nicht immer zur Erzeugung der einstellbaren Lichtverteilung genutzt wird.

Die US 2011/249460 A1 beschreibt einen Scheinwerfer für ein Kraftfahrzeug, welcher eine Einheit zum Erzeugen einer Grundlichtverteilung und eine Einheit zum Erzeugen einer variablen Lichtverteilung umfasst. Die von diesen beiden Einheiten erzeugte Lichtverteilung wird dabei überlagert. Bei der Einheit zum Erzeugen der variablen Lichtverteilung kann die Lichtverteilung mittels eines beweglichen Spiegelelements eingestellt werden. Mittels der einstellbaren Lichtverteilung kann eine Blendung von anderen Verkehrsteilnehmern und beispielsweise auch eine Reflexion von einer nassen Straße, welche den Fahrer selber blenden könnte, vermieden werden.

Auch aus der US 2013/258689 A1 ist ein Scheinwerfer für ein Kraftfahrzeug bekannt, bei welchem mittels eines beweglichen Spiegelelements eine variable Lichtverteilung erzeugt werden kann. Dabei ist es vorgesehen, Objekte zu erfassen, um beispielsweise eine Blendung von anderen Verkehrsteilnehmern vermeiden zu können. Auch ein gezieltes Anstrahlen von Objekten ist vorgesehen.

Aus der WO 2009/112910 A1 ist ein Scheinwerfer für ein Kraftfahrzeug bekannt, dessen Lichtverteilung in verschiedene Teilbereiche unterteilt ist. Die Lichtverteilung des Scheinwerfers ist dabei so einstellbar, dass diese Teilbereiche ausgeleuchtet werden oder nicht ausgeleuchtet werden. Der Scheinwerfer kann dabei eine Kamera umfassen, mittels welchen ein Bereich vor dem Kraftfahrzeug erfasst werden kann. Dadurch ist es möglich, die Lichtverteilung so einzustellen, dass dabei die Lichtverhältnisse in der Umgebung berücksichtigt werden. Dadurch können beispielsweise die Sichtverhältnisse bei Regen verbessert werden.

Aus der US 2009/046474 A1 ist ebenfalls ein Scheinwerfer für ein Kraftfahrzeug bekannt, bei welchem eine variable Lichtverteilung mittels eines beweglichen Spiegelelements eingestellt werden kann.

Aufgabe der vorliegenden Erfindung ist es, einen Scheinwerfer besonders effizient zu betreiben.

Diese Aufgaben wird erfindungsgemäß durch die Gegenstände der unabhängigen Patentansprüche gelöst. Vorteilhafte Ausgestaltungen mit zweckmäßigen Weiterbildungen der Erfindung sind in den übrigen Patentansprüchen angegeben.

Ein erster Aspekt der Erfindung bildet ein Verfahren zum Betreiben eines Kraftwagens mit einem Scheinwerfer weiter. Damit der Betrieb des Scheinwerfers besonders effizient ist, ist es erfindungsgemäß vorgesehen, dass von einer Steuereinrichtung in Abhängigkeit eines empfangenen Stellsignals ein Betrag mindestens eines der Winkel, um welchen ein schwenkbar gelagertes Spiegelelement beidseitig zu einer Neutrallage um jeweils einen Winkel periodisch mittels einer Schwenkeinrichtung verschwenkt wird, eingestellt wird und hierdurch die Lichtverteilung des Scheinwerfers eingestellt wird. Der Winkel ist dabei frei definierbar und die erfindungsgemäße Betriebsart der Schwenkbewegung des Spiegelelements ist resonant, das heißt quasistatisch. Hierdurch ist es möglich die Lichtverteilung des Scheinwerfers einzustellen, ohne dass von der Lichterzeugungseinrichtung erzeugtes Licht nicht aus dem Scheinwerfer herausreflektiert wird, das heißt im Scheinwerfer absorbiert werden muss. Mit anderen Worten wird also das Licht in keiner Stellung beziehungsweise Winkellage des Spiegelelements gezielt in einen Absorptionsbereich reflektiert.

Beispielsweise kann bei einer Landstraßen- oder Autobahnfahrt hiermit die Lichtverteilung so eingestellt werden, dass sie einem Fernlicht entspricht. Die beiden Winkel, um welche das Spiegelelement beidseitig zu einer Neutrallage verschwenkt wird, werden in diesem Fall verkleinert. Damit wird ein Abstrahlwinkel oder Öffnungswinkel des Scheinwerfers verkleinert, dafür wird aber eine Beleuchtungsstärke der Lichtverteilung aufgrund einer größeren Verweildauer des Spiegelelements in dem verkleinerten Schwenkbereich erhöht. Mit anderen Worten wird Licht von einem Beleuchtungsbereich in einen anderen Beleuchtungsbereich verschoben. Bei einer beispielsweise langsamen Fahrt in einer Stadt können die beiden Winkel, um die das Spiegelelement beidseitig um eine Neutrallage periodisch verschwenkt wird, vergrößert werden. Damit wird auch der Öffnungswinkel des Scheinwerfers vergrößert. Entsprechend wird ein größerer Bereich einer Straße seitlich vor dem Kraftwagen durch die Lichtverteilung des Scheinwerfers ausgeleuchtet, allerdings mit einer verringerten die Beleuchtungsstärke und Reichweite des Scheinwerfers. In beiden Fällen kann ein besonders großer, das heißt gleichbleibender Anteil des von der Lichterzeugungseinrichtung erzeugten Lichts auf die Straße aus dem Scheinwerfer herausreflektiert werden, sodass das Verfahren besonders effizient ist.

Erfindungsgemäß ist es dabei vorgesehen, dass in Abhängigkeit von einem Auslösesignal der Betrag wenigstens eines der jeweiligen Winkel für eine vorbestimmte Zeitdauer verändert wird, dabei das Spiegelelement mit den geänderten Winkelbeträgen periodisch verschwenkt wird, und danach das Spiegelelement von der Schwenkeinrichtung selbststätig wieder mit dem jeweils ursprünglichen Winkel beidseitig periodisch verschwenkt wird. Dies kann beispielsweise dazu genutzt werden, mittels einer kurzen Veränderung der Beträge der Winkel die Funktionalität einer Lichthupe zu erzeugen. Das Auslösesignal wird in diesem Fall also beispielsweise durch die Betätigung eines Lichthupenschalters erzeugt. Indem die Schwenkeinrichtung das Spiegelelement nach einer vorbestimmten Zeit selbststätig wieder mit dem jeweils ursprünglichen Winkel beidseitig periodisch verschwenkt, wird sichergestellt, dass die Straße für einen Fahrer des Kraftwagens weiterhin ausreichend ausgeleuchtet wird.

Erfindungsgemäß wird eine Resonanzfrequenz des Spiegelelements durch eine Lagerungseinrichtung des Spiegelelements verändert. Die Resonanzfrequenz ist die Frequenz, bei der eine Amplitude eines schwingungsfähigen Systems größer ist als bei Anregung durch benachbarte Frequenzen. Mit anderen Worten lässt sich das Spiegelelement in der Resonanzfrequenz bei gleicher Antriebsleistung mit dem größten Winkel relativ zur Neutrallage periodisch auslenken. Durch das Verändern der Resonanzfrequenz kann der Betrag des Winkels eingestellt werden, um welchen das Spiegelelement verschwenkt wird. Alternativ oder zusätzlich kann durch die Lagerungseinrichtung bei einer Veränderung des Betrages des Winkels die Resonanzfrequenz so anpasst werden, dass das Verschwenken des Spiegelelements besonders energiesparend ist. Die Lagerungseinrichtung verändert erfindungsgemäß die Resonanzfrequenz durch ein Verschieben einer Masse und/oder das Einstellen einer Federkraft. Durch das Verändern der Resonanzfrequenz wird erfingungsgemäß der Betrag des Winkels eingestellt, um welchen das Spiegelelement verschwenkt wird, sodass eine Leuchtstärke der Lichterzeugungseinrichtung durch die Steuereinrichtung in Abhängigkeit von einer Winkellage des Spiegelelements eingestellt wird.

In weiterer vorteilhafter Ausgestaltung der Erfindung ist es vorgesehen, dass mittels einer Sensorvorrichtung Fahrzeugdaten und/oder Umgebungsdaten erzeugt werden und das Stellsignal in Abhängigkeit der durch die Sensoreinrichtung erfassten Fahrzeugdaten und/oder Umgebungsdaten eingestellt wird. Bei den Fahrzeugdaten kann es sich beispielsweise um eine Geschwindigkeit oder eine Beschleunigung des Kraftwagens handeln. Bei den Umgebungsdaten kann es sich beispielsweise um die geografische Position des Kraftwagens, einen Helligkeitswert der Umgebung oder Daten über andere Verkehrsteilnehmer handeln. Entsprechend kann die Sensoreinrichtung beispielsweise einen Geschwindigkeitsmesser, einen GPS-Sensor, einen Helligkeitssensor, eine Kamera, einen Lasersensor oder Raddrehzahlsensoren umfassen. Dadurch lässt sich die Lichtverteilung des Scheinwerfers besonders bedarfsgerecht einstellen.

Weiterhin vorteilhaft ist es, wenn zur Erzeugung einer Lichtverteilung das Spiegelelement um zwei zueinander orthogonale Schwenkachsen, insbesondere um eine vertikale und eine horizontale Schwenkachse, beidseitig zu einer Neutrallage zur Erzeugung einer Lichtverteilung um jeweils einen Winkel verschwenkt wird. Hierdurch kann die Lichtverteilung besonders bedarfsgerecht und präzise eingestellt werden. Außerdem ist es insbesondere möglich, als Lichterzeugungseinrichtung einen Laser zu verwenden. Mittels des Lasers kann eine besonders hohe Leuchtdichte erzeugt werden. Dadurch kann auch das Spiegelelement besonders klein ausgeführt werden, welches besonders energiesparend verschwenkbar ist und zudem einen besonders geringen Bauraum benötigt.

In weiterer vorteilhafter Ausgestaltung der Erfindung ist es vorgesehen, dass der Betrag nur eines der Winkel, um welchen das Spiegelelement in eine Richtung der beidseitigen Verschwenkung um die Schwenkachse verschwenkt wird, durch das Stellsignal der Steuereinrichtung eingestellt wird. Dies ermöglicht eine individuelle Verschiebung einer der vertikalen und/oder horizontalen Hell/Dunkel-Grenzen der Lichtverteilung des Scheinwerfers. Außerdem können so beispielsweise besonders einfach andere Verkehrsteilnehmer bedarfsgerecht ausgeblendet werden.

Weiterhin vorteilhaft ist es, wenn eine optische Ausgangsleistung einer Lichtquelle der Lichterzeugungseinrichtung durch die Steuereinrichtung in Abhängigkeit von einer Winkellage des Spiegelelements eingestellt wird. Die periodische Schwenkbewegung des Spiegelelements beinhaltet, dass sich das Spiegelelement besonders lange während der Schwenkbewegung nahe an einer maximalen Auslenkung in Bezug auf die Neutrallage befindet. Durch eine Umkehrung der Schwenkrichtung in maximaler Auslenkung des Spiegelelements bewegt sich das Spiegelelement in der Nähe dieses Winkels nämlich mit einer relativ gesehen geringeren Winkelgeschwindigkeit als in der Neutrallage. Dadurch ist die Beleuchtungsstärke an den Rändern der Lichtverteilung des Scheinwerfers besonders hoch. Durch ein Einstellen der optischen Ausgangsleistung der Lichtquelle in Abhängigkeit der Winkellage des Spiegelelements kann solch eine erhöhte Beleuchtungsstärke entsprechend vermieden werden. Insgesamt ist so eine besonders bedarfsgerechte Einstellung der Beleuchtungsstärke der Lichtverteilung möglich.

Ein zweiter Aspekt der Erfindung betrifft einen Kraftwagen mit mindestens einem Scheinwerfer, wobei der Kraftwagen dazu ausgebildet ist, mit einem Verfahren nach einem der vorhergehenden Ausführungsbeispiele betrieben zu werden. Die sich hieraus ergebenden Merkmale und deren Vorteile sind den Beschreibungen des ersten Erfindungsaspekts zu entnehmen, wobei vorteilhafte Ausgestaltungen des ersten Erfindungsaspekts als vorteilhafte Ausgestaltungen des zweiten Erfindungsaspekts anzusehen sind.

Ein dritter Aspekt der Erfindung betrifft einen Scheinwerfer. Um einen besonders effizienten Scheinwerfer zu schaffen, ist es erfindungsgemäß vorgesehen, dass eine Steuereinrichtung dazu ausgebildet ist, in Abhängigkeit eines empfangenden Stellsignals einen Betrag mindestens eines der Winkel einzustellen und hierdurch die Lichtverteilung des Scheinwerfers einstellbar ist. Die sich hieraus ergebenden Merkmale und deren Vorteile sind den Beschreibungen des ersten und zweiten Erfindungsaspekts zu entnehmen, wobei vorteilhafte Ausgestaltungen des ersten und zweiten Erfindungsaspekts als vorteilhafte Ausgestaltungen des dritten Erfindungsaspekts anzusehen sind.

Erfindungsgemäß ist es dabei vorgesehen, dass die Steuereinrichtung (36) dazu ausgebildet ist, in Abhängigkeit von einem Auslösesignal den Betrag wenigstens eines der jeweiligen Winkel für eine vorbestimmte Zeitdauer zu verändern, sodass das Spiegelelement mit den geänderten Winkelbeträgen periodisch verschwenkt wird, und danach das Spiegelelement von der Schwenkeinrichtung selbsttätig wieder mit dem jeweils ursprünglichen Winkel beidseitig periodisch verschwenkt wird.

Erfindungsgemäß ist eine Lagerungseinrichtung des Spiegelelements dazu eingerichtet, eine Resonanzfrequenz des Spiegelelements durch ein Verschieben einer Masse und/oder ein Einstellen einer Federkraft zu verändern.

Erfindungsgemäß ist die Steuereinrichtung dazu ausgebildet, durch das Verändern der Resonanzfrequenz den Betrag des Winkels einzustellen, um welchen das Spiegelelement verschwenkt wird, um dadurch eine Leuchtstärke der Lichterzeugungseinrichtung in Abhängigkeit von einer Winkellage des Spiegelelements einzustellen.

Weiter Vorteile, Merkmale und Einzelheiten der Erfindung ergeben sich aus der nachfolgenden Beschreibung bevorzugter Ausführungsbeispiele der Erfindung sowie anhand der Zeichnungen; diese zeigen in:
- Fig. 1:: eine schematische Draufsicht auf einen Kraftwagen mit zwei Scheinwerfern, wobei zwei verschiedene Lichtverteilungen gezeigt sind;
- Fig. 2:: eine schematische Schnittansicht durch einen Scheinwerfer gemäß Fig. 1; und
- Fig. 3:: einen Graphen mit der schematischen Beleuchtungsstärke der zwei Lichtverteilungen gemäß Fig. 1.

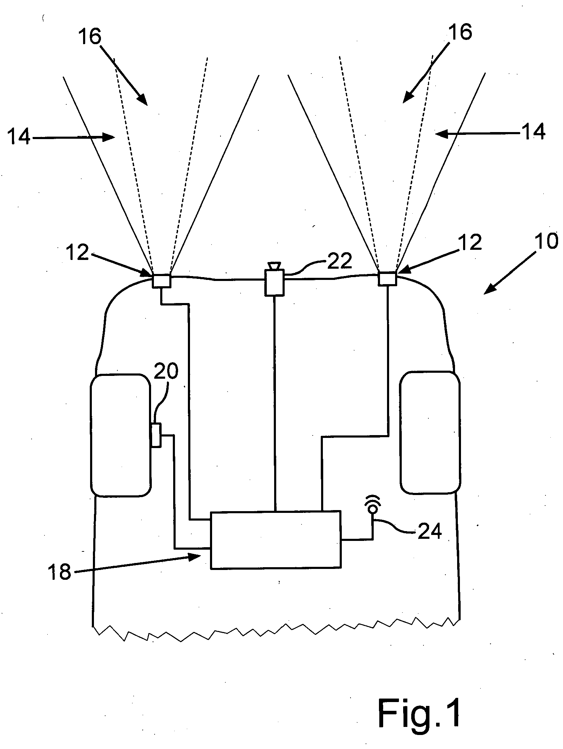

Fig. 1 zeigt in einer schematischen Draufsicht einen Kraftwagen 10 mit zwei Scheinwerfern 12. Mittels dieser Scheinwerfer 12 können wenigstens zwei unterschiedliche Lichtverteilungen 14 und 16 auf einer Straße erzeugt werden. Weiterhin umfasst der Kraftwagen 10 eine Sensoreinrichtung 18 zum Erzeugen von Fahrzeugdaten und/oder Umgebungsdaten. Im gezeigten Beispiel umfasst die Sensoreinrichtung 18 dazu beispielsweise einen Raddrehzahlsensor 20, eine Kamera 22 und einen GPS-Sensor 24. Alternativ oder zusätzlich kann die Sensoreinrichtung 18 auch noch beispielsweise einen Helligkeitssensor und/oder einen Lasersensor - auch Lidar genannt - umfassen.

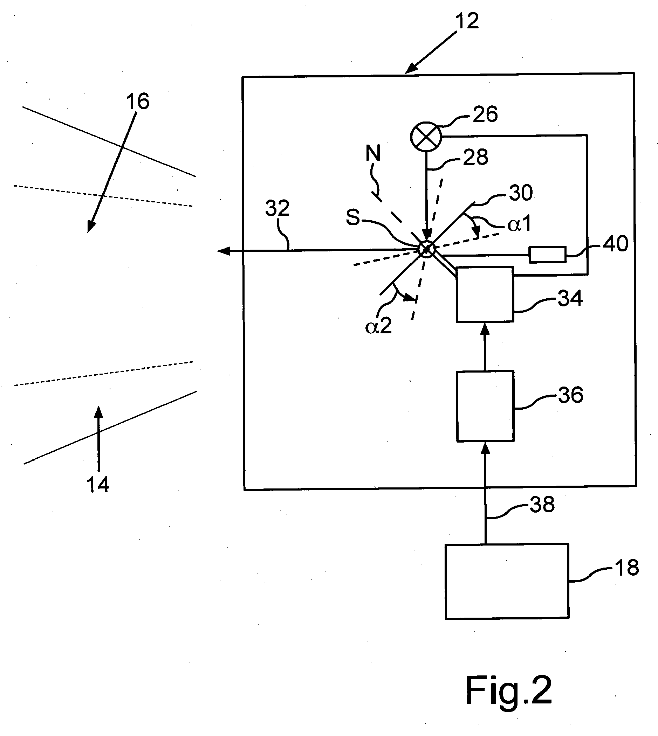

Fig. 2 zeigt in einer schematischen Schnittansicht durch einen der Scheinwerfer 12, wie durch eine Lichterzeugungseinrichtung 26 erzeugtes Licht 28 mittels eines wenigstens um eine Schwenkachse S schwenkbar gelagerten Spiegelelements 30 aus dem Scheinwerfer 12 als Lichtstrahl 32 herausreflektiert wird. Bei der Lichterzeugungseinrichtung 26 kann es sich beispielsweise um eine Leuchtdiode (LED) oder um einen Laser handeln. Zur Erzeugung einer Lichtverteilung 14, 16 des Scheinwerfers 12 ist das Spiegelelement 30 zu einer mit N markierten Neutrallage beidseitig um jeweils einen Winkel α1, α2 periodisch mittels einer Schwenkeinrichtung 34 verschwenkbar. Bei der Schwenkachse S handelt es sich im gezeigten Beispiel um eine vertikale Achse. Mit anderen Worten wird also das Spiegelelement 30 durch die Schwenkeinrichtung 34 um die aus der Figurenebene senkrecht herauszeigende Schwenkachse S gedreht, sodass das von der Lichterzeugungseinrichtung 26 erzeugte Licht 28 als Lichtstrahl 32 in verschiedenen Richtungen aus dem Scheinwerfer 12 herausreflektiert wird.

Von einer Steuereinrichtung 36 wird in Abhängigkeit eines empfangenen Stellsignals 38 ein Betrag mindestens einer der Winkel α1, α2 eingestellt und hierdurch die Lichtverteilung 14, 16 des Scheinwerfers 12 eingestellt. Im gezeigten Ausführungsbeispiel wird beispielsweise der Betrag der beiden Winkel α1, α2 zur Einstellung der Lichtverteilung 14 des Scheinwerfers 12 im Vergleich zu der Lichtverteilung 16 vergrößert. Damit vergrößert sich entsprechend ein Schwenkbereich des Spiegelelements 30 und das Licht 28 wird in einem größeren Winkelbereich Licht aus dem Scheinwerfer 12 herausreflektiert. Entsprechend wird der Betrag der Winkel α1, α2 im Vergleich reduziert, um die Lichtverteilung 16 des Scheinwerfers 12 einzustellen. Die Lichtverteilung 14 entspricht im gezeigten Fall beispielsweise der Lichtverteilung eines Abblendlichts, während die Lichtverteilung 16 beispielsweise der Lichtverteilung eines Fernlichts entspricht.

Im vorliegenden Fall wird das Stellsignal 38 durch die Sensoreinrichtung 18 erzeugt. Mittels einer Recheneinheit wird zum Beispiel mithilfe der durch Raddrehzahlsensor 20 erfassten Geschwindigkeit und mit dem GPS-Sensor 24 erfassten geografischen Position des Kraftwagens 10 ermittelt, dass sich der Kraftwagen 10 in einer Stadt befindet und entsprechend bedarfsgerecht die Lichtverteilung 14 eingestellt. Wird dagegen beispielsweise ermittelt, dass der Kraftwagen 10 auf einer Autobahn fährt, so wird beispielsweise die Lichtverteilung 16 entsprechend eines Fernlichts eingestellt. Alternativ kann das Stellsignal auch durch einen vom Fahrer des Kraftwagens 10 bedienbaren Steuerschalter erzeugt werden.

Zusätzlich oder alternativ kann das Spiegelelement 30 sowohl um die beispielsweise vertikale Schwenkachse S, als auch um eine weitere dazu orthogonale, beispielsweise horizontale, Schwenkachse beidseitig zu der Neutrallage N zur Erzeugung einer Lichtverteilung um jeweils einen Winkel verschwenkt werden. Dies ermöglicht es insbesondere, die Lichterzeugungseinrichtung 26 als Laser auszuführen und das Spiegelelement besonders leicht und Bauraum sparend zu gestalten. Die Lichtverteilungen 14, 16 sind dann zeilenweise auf der Straße aufgebaut.

Weiterhin kann es nicht erfindungsgemäß vorgesehen sein, dass die Beträge der Winkel α1 und α2 unterschiedlich eingestellt werden. Dazu wird das Spiegelelement 30 in einer anderen, nicht resonanten Betriebsart durch die Schwenkeinrichtung 34 verschwenkt, da das Spiegelelement bei einer resonanten Schwenkbewegung beziehungsweise Betriebsart nur symmetrisch zur Neutrallage N ausgelenkt werden kann. Dies erlaubt es, dass Licht asymmetrisch in Bezug auf eine Längsachse des Scheinwerfers 12 beziehungsweise des Kraftwagens 10 aus dem Scheinwerfer 12 heraus zu reflektieren. Damit können beispielsweise seitliche Bereiche der Lichtverteilung 14 oder 16 gezielt nicht oder schwächer ausgeleuchtet werden, um so andere Verkehrsteilnehmer nicht zu blenden. Außerdem kann so bei der Verwendung von zwei oder mehr Scheinwerfern 12 eine besonders gleichmäßige Lichtverteilung 14, 16 erzeugt werden.

Fig. 2 zeigt weiterhin eine Lagerungseinrichtung 40, mittels welcher eine Resonanzfrequenz des Spiegelelements 30 verändert wird. Mithilfe der Lagerungseinrichtung 40 kann eine Amplitude - also der maximale Auslenkungswinkel - des Spiegelelements 30, mit welcher dieses Spiegelelement 30 ausgelenkt wird, verändert werden. Alternativ oder zusätzlich kann die Leistung besonders reduziert werden, die zum Verschwenken des Spiegelelements 30 mittels der Schwenkeinrichtung 34 notwendig ist. Die Lagerungseinrichtung 40 verstellt die Resonanzfrequenzen des Spiegelelements 30 durch ein Verschieben einer zentrisch gelagerten Masse und/oder das Verändern einer Federkraft.

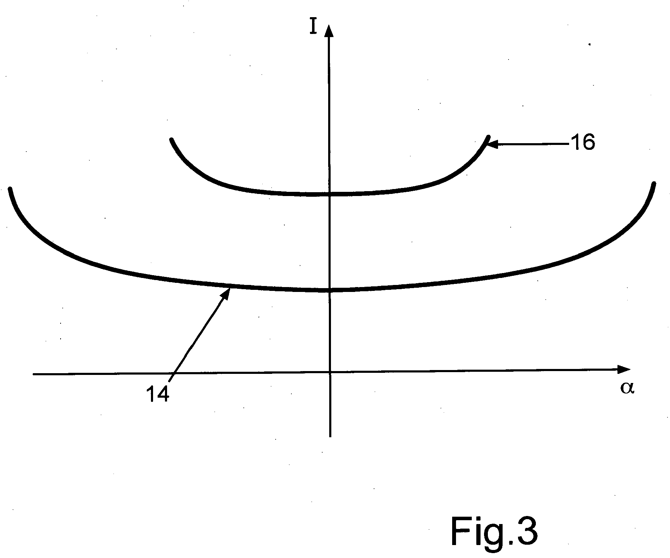

Der Graph 3 zeigt in einer schematischen Ansicht die Lichtintensität der Beleuchtungsstärke der Lichtverteilung 14 und 16 des Scheinwerfers 12 in einer vertikalen Ebene und in der resonanten Betriebsart. Zu diesem Zweck ist auf der Y-Achse des Graphen von Fig. 3 die Lichtintensität I in Bezug zu der auf X-Achse des Graphen aufgetragenen Winkelauslenkung des Spiegelelements 30 und damit auch der Winkelauslenkung des Lichtstrahls 32 aufgetragen. Zu erkennen ist, dass die Beleuchtungsstärke der Lichtverteilung 14 wesentlich geringer ist als die Beleuchtungsstärke der Lichtverteilung 16. Dafür wird durch die Lichtverteilung 14 ein größerer Winkelbereich ausgeleuchtet als durch die Lichtverteilung 16. Mit anderen Worten strahlt also der Scheinwerfer 12 mit der eingestellten Lichtverteilung 14 in einem wesentlich größeren Bereich Licht auf die Straße, wobei aber die Lichtintensität vergleichsweise reduziert ist. Umgekehrt strahlt der Scheinwerfer 12 mit der Lichtverteilung 16 nur Licht auf einen kleineren Bereich der Straße, dafür ist hier aber die Beleuchtungsstärke besonders hoch. Damit kann der Scheinwerfer 12 die Straße mit der Lichtverteilung 16 auch in einer größeren Entfernung vom Kraftwagen 10 noch ausreichend beleuchten. Bei einer besonders hohen Geschwindigkeit des Kraftwagens 10 ist also das Einstellen der Lichtverteilung 16 mit der besonders hohen Reichweite sinnvoll. Solch eine Lichtverteilung 16 ist beispielsweise bei einer Fahrt auf der Autobahn besonders günstig. Dadurch können Hindernisse auch bei hohen Fahrgeschwindigkeiten rechtzeitig erkannt werden. Bei einer im Vergleich dazu geringeren Geschwindigkeit des Kraftwagens 10 ist dagegen das Einstellen der Lichtverteilung 14 mit der im Vergleich reduzierten Reichweite zweckdienlicher.

In Fig. 3 ist weiterhin zu erkennen, dass die Beleuchtungsstärke in dem Bereich maximaler Auslenkung des Spiegelelements 30 von der Neutrallage N erhöht ist. Dieser Effekt ergibt sich dadurch, dass bei einem Wechsel der Bewegungsrichtung der resonanten Schwenkbewegung des Spiegelelements 30 durch die Steuereinrichtung 36 das Spiegelelement 30 sich in einem Bereich nahe dieses Bewegungsrichtungswechsels besonders langsam bewegt. Entsprechend wird besonders viel Licht in die Randbereiche der Lichtverteilung 14, 16 reflektiert. Um diesen Effekt zu reduzieren, wird eine Leuchtstärke der Lichterzeugungseinrichtung 26 durch die Steuereinrichtung 36 in Abhängigkeit von einer Winkellage des Spiegelelements 30 eingestellt. Dafür kann die Lichterzeugungseinrichtung 26 beispielsweise bei maximaler Auslenkung des Spiegelelements 30 gedimmt oder ganz ausgeschaltet werden. Alternativ kann auch die Beleuchtungsstärke in dem Bereich maximaler Auslenkung des Spiegelelements 30 durch eine Regelung der Amplitude der Schwenkbewegung geregelt werden.

Es wurde also gezeigt, wie mit dem Verfahren und dem Scheinwerfer 12 eine Verschiebung von Licht möglich ist. Dies kann auch dazu genutzt werden in Abhängigkeit von einem Auslösesignal den Betrag wenigstens eines der jeweiligen Winkel α1, α2 für eine vorbestimmte Zeit zu verändern und danach das Spiegelelement 30 von der Schwenkeinrichtung 34 selbsttätig wieder mit dem jeweils ursprünglichen Winkel α1, α2 beidseitig periodisch verschwenkt wird. Damit kann die Funktionalität einer Lichthupe realisiert werden: Das Licht blitzt für einen entgegenkommenden Fahrer kurzzeitig hell auf. Dafür wird das Spiegelelement 30 während der vorgegebenen Zeit mit besonders kleinen Winkeln α1, α2 verschwenkt. Dabei wird die Lichtverteilung 14, 16 für den Fahrer des Kraftwagens 10 in kaum oder nicht störende Art und Weise für eine begrenzte Zeit verändert, sodass die Straße weiterhin ausreichend ausgeleuchtet ist.

Die Erfindung erlaubt es, Licht von einem Beleuchtungsbereich in einen anderen Beleuchtungsbereich zu verschieben. Bei beispielsweise strahlgeführten Beamer-Scheinwerfern wird einer oder mehrere Lichtstrahle durch ein Spiegelelement 30 abgelenkt. Das Spiegelelement 30 kann zum Beispiel besonders klein ausgeführt sein und wird resonant betrieben. Durch entsprechende Einstellung der Amplitude und damit der maximalen Winkel α1, α2 des Spiegelelements 30 kann die Lichtverteilung 14, 16 eingestellt werden. Um Störeinflüsse zu vermeiden, ist auch eine langsame Amplitudenänderung im Sekundenbereich möglich. Dies bewirkt beispielsweise graduelle Übergänge zwischen der Lichtverteilung 14 und 16 und verhindert ein Überschwingen des Spiegelelements 30. Es ist ein automatisches Einstellen der Lichtverteilung 16 beispielsweise bei einer Autobahnfahrt möglich. Dabei wird der Öffnungswinkel des Fernlichts verkleinert und damit die Beleuchtungsstärke aufgrund der größeren Verweildauer des Spiegelelements 30 in einem kleineren Winkelbereich auf der Straße erhöht. Ebenso kann der Öffnungswinkel des Scheinwerfers 12 bei langsamer Fahrt, zum Beispiel in der Stadt, automatisch vergrößert werden und somit sowohl die Beleuchtungsstärke als auch die Reichweite des Lichts gesenkt werden. Gleichzeitig wird aber durch den vergrößerten Öffnungswinkel auch Randbereiche der Straße und/oder ein seitlicher Fußgänger und/oder Radweg mit der Lichtverteilung 14 ausgeleuchtet.

## Patentansprüche

1. Verfahren zum Betreiben eines Kraftwagens (10) mit einem Scheinwerfer (12), bei welchem durch eine Lichterzeugungseinrichtung (26) erzeugtes Licht (28) mittels eines um wenigstens eine Schwenkachse (S) schwenkbar gelagerten Spiegelelements (30) aus dem Scheinwerfer (12) heraus reflektiert wird, wobei das Spiegelelement (30) zur Erzeugung einer Lichtverteilung (14, 16) des Scheinwerfers (12) beidseitig zu einer Neutrallage (N) um jeweils einen Winkel (α1, α2) mittels einer Schwenkeinrichtung (34) verschwenkt wird,
wobei von einer Steuereinrichtung (36) in Abhängigkeit eines empfangenen Stellsignals ein Betrag mindestens eines der Winkel (α1, α2) eingestellt wird und hierdurch die Lichtverteilung (14, 16) des Scheinwerfers (12) eingestellt wird, wobei in Abhängigkeit von einem Auslösesignal der Betrag wenigstens eines der jeweiligen Winkel (α1, α2) für eine vorbestimmte Zeitdauer verändert wird, dabei das Spiegelelement (30) mit den geänderten Winkelbeträgen periodisch verschwenkt wird, und danach das Spiegelelement (30) von der Schwenkeinrichtung (34) selbsttätig wieder mit dem jeweils ursprünglichen Winkel (α1, α2) beidseitig periodisch verschwenkt wird,
**dadurch gekennzeichnet, dass**
eine Resonanzfrequenz des Spiegelelements (30) durch eine Lagerungseinrichtung (40) des Spiegelelements (30) verändert wird, wobei die Resonanzfrequenz mittels der Lagerungseinrichtung (40) durch ein Verschieben einer Masse und/oder ein Einstellen einer Federkraft verändert wird, wobei durch das Verändern der Resonanzfrequenz der Betrag des Winkels (α1, α2) eingestellt wird, um welchen das Spiegelelement (30) verschwenkt wird, sodass eine Leuchtstärke der Lichterzeugungseinrichtung (26) durch die Steuereinrichtung (36) in Abhängigkeit von einer Winkellage des Spiegelelements (30) eingestellt wird.

2. Verfahren nach Anspruch 1,
**dadurch gekennzeichnet, dass**
mittels einer Sensoreinrichtung (18) Fahrzeugdaten und/oder Umgebungsdaten erzeugt werden und das Stellsignal in Abhängigkeit der durch die Sensoreinrichtung (18) erfassten Fahrzeugdaten und/oder Umgebungsdaten eingestellt wird.

3. Verfahren nach Anspruch 1 bis 2,
**dadurch gekennzeichnet, dass**
zur Erzeugung einer Lichtverteilung (14, 16) das Spiegelelement (30) um zwei zueinander orthogonale Schwenkachsen (S), insbesondere um eine vertikale und eine horizontale Schwenkachse, beidseitig zu einer Neutrallage (N) um jeweils einen Winkel (α1, α2) verschwenkt wird.

4. Verfahren nach Anspruch 1 bis 3,
**dadurch gekennzeichnet, dass**
der Betrag nur eines der Winkel (α1, α2), um welchen das Spiegelelement (30) in eine Richtung der beidseitigen Verschwenkung um die Schwenkachse (S) verschwenkt wird, durch das Stellsignal der Steuereinrichtung (36) eingestellt wird.

5. Verfahren nach Anspruch 1 bis 4,
**dadurch gekennzeichnet, dass**
eine optische Ausgangsleistung einer Lichtquelle der Lichterzeugungseinrichtung (26) durch die Steuereinrichtung (36) in Abhängigkeit von einer Winkellage des Spiegelelements (30) eingestellt wird.

6. Kraftwagen (10) mit mindestens einem Scheinwerfer (12), wobei der Kraftwagen (10) dazu ausgebildet ist, nach einem Verfahren nach einem der Ansprüche 1 bis 5 betrieben zu werden.

7. Scheinwerfer (12) mit einem wenigstens um eine Schwenkachse (S) schwenkbar gelagerten Spiegelelement (30) mittels welchem von einer Lichterzeugungseinrichtung (26) erzeugtes Licht (28) aus dem Scheinwerfer (12) heraus reflektierbar ist, wobei das Spiegelelement (30) zur Erzeugung einer Lichtverteilung (14, 16) des Scheinwerfers (12) beidseitig zu einer Neutrallage (N) um jeweils einen Winkel (α1, a2) mittels einer Schwenkeinrichtung (34) verschwenkbar ist,
wobei eine Steuereinrichtung (36) dazu ausgebildet ist, in Abhängigkeit eines empfangenen Stellsignals einen Betrag mindestens eines der Winkel (α1, α2) einzustellen und hierdurch die Lichtverteilung (14, 16) des Scheinwerfers (12) einstellbar ist, wobei die Steuereinrichtung (36) dazu ausgebildet ist, in Abhängigkeit von einem Auslösesignal den Betrag wenigstens eines der jeweiligen Winkel (α1, α2) für eine vorbestimmte Zeitdauer zu verändern, sodass das Spiegelelement (30) mit den geänderten Winkelbeträgen periodisch verschwenkt wird, und danach das Spiegelelement (30) von der Schwenkeinrichtung (34) selbsttätig wieder mit dem jeweils ursprünglichen Winkel (α1, α2) beidseitig periodisch verschwenkt wird,
**dadurch gekennzeichnet, dass**
das Spiegelelement (30) eine Lagerungseinrichtung (40) aufweist, welche dazu eingerichtet ist, eine Resonanzfrequenz des Spiegelelements (30) durch ein Verschieben einer Masse und/oder ein Einstellen einer Federkraft zu verändern, wobei die Steuereinrichtung (36) dazu ausgebildet ist, durch das Verändern der Resonanzfrequenz den Betrag des Winkels (α1, α2) einzustellen, um welchen das Spiegelelement (30) verschwenkt wird, um dadurch eine Leuchtstärke der Lichterzeugungseinrichtung (26) in Abhängigkeit von einer Winkellage des Spiegelelements (30) einzustellen.

## Claims

1. Method for operating a motor vehicle (10) with a headlamp (12), in the case of which light (28) generated by means of a light generating device (26) is reflected by means of a mirror element (30) pivotably mounted about at least one pivot axis (S) out of the headlamp (12), wherein the mirror element (30) for the generation of a light distribution (14, 16) of the headlamp (12) is pivoted on both sides of a neutral position (N) about in each case one angle (α1, α2) by means of a pivoting device (34),
wherein a value of at least one of the angles (α1, α2) is set by a control device (36) depending on a received adjusting signal, and thus the light distribution (14, 16) of the headlamp (12) is set, wherein depending on a trigger signal the value of at least one of the respective angles (α1, α2) is altered for a predetermined time duration, as a result the mirror element (30) is periodically pivoted with the altered angle values, and thereafter the mirror element (30) is automatically periodically pivoted by the pivoting device (34) again with the respectively original angle (α1, α2) on both sides,
**characterised in that**
a resonance frequency of the mirror element (30) is altered by a support device (40) of the mirror element (30), wherein the resonance frequency is altered by means of the support device (40) by means of a moving of a mass and/or an adjusting of a spring force, wherein by means of the altering of the resonance frequency the value of the angle (α1, α2) is set, about which the mirror element (30) is pivoted, such that an illumination intensity of the light generating device (26) is set by the control device (36) depending on an angle position of the mirror element (30).

2. Method according to claim 1,
**characterised in that**
by means of a sensor device (18) vehicle data and/or environment data are generated and the adjusting signal is set depending on the vehicle data and/or environment data detected by the sensor device (18).

3. Method according to claim 1 to 2,
**characterised in that**
for generating a light distribution (14, 16) the mirror element (30) is pivoted about two pivot axes (S) orthogonal to one another, in particular about one vertical and one horizontal pivot axis, about respectively one angle (α1, α2) on both sides of a neutral position (N).

4. Method according to claim 1 to 3,
**characterised in that**
the value of only one of the angles (α1, α2), about which the mirror element (30) is pivoted in one direction of the two-sided pivoting about the pivot axis (S), is set by the adjusting signal of the control device (36).

5. Method according to claim 1 to 4,
**characterised in that**
an optical output power of a light source of the light generating device (26) is set by the control device (36) depending on an angular position of the mirror element (30).

6. Motor vehicle (10) with at least one headlamp (12), wherein the motor vehicle (10) is configured to be operated according to a method according to any of claims 1 to 5.

7. Headlamp (12) with one mirror element (30), mounted pivotably at least about one pivot axis (S), by means of which light (28) generated by a light generating device (26) can be reflected out of the headlamp (12), wherein the mirror element (30) for the generation of a light distribution (14, 16) of the headlamp (12) can be pivoted on each side of a neutral position (N) about in each case one angle (α1, α2) by means of a pivoting device (34),
wherein a control device (36) is configured depending on a received adjusting signal to set a value of at least one of the angles (α1, α2) and thereby the light distribution (14, 16) of the headlamp (12) can be set, wherein the control device (36) is configured depending on a trigger signal to alter the value of at least one of the respective angles (α1, α2) for a predetermined time duration, such that the mirror element (30) is pivoted periodically with the altered angular values, and thereafter the mirror element (30) is automatically periodically pivoted by the pivoting device (34) again with the respectively original angle (α1, α2) on both sides,
**characterised in that**
the mirror element (30) has a support device (40) which is configured to alter a resonance frequency of the mirror element (30) by moving a mass and/or by adjusting a spring force, wherein the control device (36) is configured, by means of the altering of the resonance frequency, to alter the value of the angle (α1, α2) about which the mirror element (30) is pivoted, in order thereby to set an illumination intensity of the light generating device (26) depending on an angular position of the mirror element (30).

## Revendications

1. Procédé de fonctionnement d'un véhicule automobile (10) avec un phare (12), pour lequel de la lumière (28) générée par un dispositif de génération de lumière (26) est réfléchie du phare (12) au moyen d'un élément de miroir (30) disposé de manière pivotante autour d'au moins un axe de pivotement (S), dans lequel l'élément de miroir (30) est pivoté pour la génération d'une distribution de lumière (14, 16) du phare (12) de part et d'autre d'une position neutre (N) autour respectivement d'un angle (α1, α2) au moyen d'un dispositif de pivotement (34),
dans lequel une somme au moins d'un des angles (α1, α2) est réglée par un dispositif de commande (36) en fonction d'un signal de réglage reçu et par là-même la distribution de lumière (14, 16) du phare (12) est réglée, dans lequel la somme au moins d'un des angles respectifs (α1, α2) pour une durée prédéterminée est modifiée en fonction d'un signal de déclenchement, l'élément de miroir (30) étant alors pivoté périodiquement avec les sommes angulaires modifiées, et ensuite l'élément de miroir (30) est de nouveau automatiquement pivoté de part et d'autre périodiquement par le dispositif de pivotement (34) avec l'angle (α1, α2) respectivement d'origine,
**caractérisé en ce que**
une fréquence de résonance de l'élément de miroir (30) est modifiée par un dispositif de support (40) de l'élément de miroir (30), dans lequel la fréquence de résonance est modifiée au moyen du dispositif de support (40) par un déplacement d'une masse et/ou un réglage d'une force de ressort, dans lequel la somme de l'angle (α1, α2) est réglée par la modification de la fréquence de résonance, autour duquel l'élément de miroir (30) est pivoté de sorte qu'une intensité lumineuse du dispositif de génération de lumière (26) soit réglée par le dispositif de commande (36) en fonction d'une position angulaire de l'élément de miroir (30).

2. Procédé selon la revendication 1,
**caractérisé en ce que**
au moyen d'un dispositif de capteur (18) des données de véhicule et/ou des données ambiantes sont générées et le signal de réglage est réglé en fonction des données de véhicule et/ou des données ambiantes détectées par le dispositif de capteur (18).

3. Procédé selon la revendication 1 à 2,
**caractérisé en ce que**
pour la génération d'une distribution de lumière (14, 16) l'élément de miroir (30) est pivoté autour de deux axes de pivotement (S) orthogonaux l'un à l'autre, en particulier autour d'un axe de pivotement vertical et d'un axe de pivotement horizontal, de part et d'autre d'une position neutre (N) autour respectivement d'un angle (α1, α2).

4. Procédé selon la revendication 1 à 3,
**caractérisé en ce que**
la somme d'un seul des angles (α1, α2) autour desquels l'élément de miroir (30) est pivoté dans une direction du pivotement bilatéral autour de l'axe de pivotement (S) est réglée par le signal de réglage du dispositif de commande (36).

5. Procédé selon la revendication 1 à 4,
**caractérisé en ce que**
une puissance de sortie optique d'une source de lumière du dispositif de génération de lumière (26) est réglée par le dispositif de commande (36) en fonction d'une position angulaire de l'élément de miroir (30).

6. Véhicule automobile (10) avec au moins un phare (12), dans lequel le véhicule automobile (10) est réalisé afin de fonctionner selon un procédé selon l'une quelconque des revendications 1 à 5.

7. Phare (12) avec un élément de miroir (30) disposé de manière pivotante au moins autour d'un axe de pivotement (S) au moyen duquel de la lumière (28) générée par un dispositif de génération de lumière (26) peut être réfléchie du phare (12), dans lequel l'élément de miroir (30) peut être pivoté pour la génération d'une distribution de lumière (14, 16) du phare (12) de part et d'autre d'une position neutre (N) autour respectivement d'un angle (α1, α2) au moyen d'un dispositif de pivotement (34),
dans lequel un dispositif de commande (36) est réalisé fin de régler en fonction d'un signal de réglage reçu une somme au moins d'un des angles (α1, α2) et par là-même la distribution de lumière (14, 16) du phare (12) est réglable, dans lequel le dispositif de commande (36) est réalisé afin de modifier en fonction d'un signal de déclenchement la somme au moins d'un des angles respectifs (α1, α2) pour une durée prédéterminée de sorte que l'élément de miroir (30) soit pivoté périodiquement avec les sommes angulaires modifiées, et que l'élément de miroir (30) soit ensuite de nouveau pivoté automatiquement de part et d'autre périodiquement par le dispositif de pivotement (34) avec l'angle (α1, α2) respectivement d'origine,
**caractérisé en ce que**
l'élément de miroir (30) présente un dispositif de support (40), qui est configuré afin de modifier une fréquence de résonance de l'élément de miroir (30) par un déplacement d'une masse et/ou un réglage d'une force de ressort, dans lequel le dispositif de commande (36) est réalisé afin de régler par la modification de la fréquence de résonance la somme de l'angle (α1, α2) autour duquel l'élément de miroir (30) est pivoté, afin de régler ainsi une intensité lumineuse du dispositif de génération de lumière (26) en fonction d'une position angulaire de l'élément de miroir (30).
